# EUROPÄISCHE PATENTANMELDUNG

(11) **EP 3 569 478 A1**
(43) Veröffentlichungstag der Anmeldung: **20.11.2019**
(21) Anmeldenummer: 19163978.0
(22) Anmeldetag: 20.03.2019
(51) Int. Cl.: B62D 11/20, B62D 55/065

(54) **LANDWIRTSCHAFTLICHES RAUPENFAHRZEUG**

(30) Priorität: 14.05.2018 DE 102018111443
(71) Anmelder: CLAAS Selbstfahrende Erntemaschinen GmbH, 33428 Harsewinkel (DE)
(72) Erfinder: von Teschenhausen Uckelmann, Ulrich, 48231 Warendorf (DE)
(74) Vertreter: CLAAS Gruppe

(57) **Zusammenfassung**

Die Erfindung betrifft ein landwirtschaftliches Raupenfahrzeug, insbesondere einen Raupengroßtraktor, mit einem Fahrwerk (2), welches eine Vorderachse (3) und eine Hinterachse (4) aufweist, wobei an der Vorderachse (3) und an der Hinterachse (4) jeweils zwei, bezogen auf eine Fahrzeuglängsachse (L), gegenüberliegende antreibbare Raupenlaufwerke (5-8) angeordnet sind. Es wird vorgeschlagen, dass die Vorderachse (3) durch Achsschenkel (11, 12), über die die zwei antreibbaren Raupenlaufwerke (5, 6) gelenkt sind, gebildet ist.

## Beschreibung

Die Erfindung betrifft ein landwirtschaftliches Raupenfahrzeug, insbesondere einen Raupengroßtraktor, mit den Merkmalen des Oberbegriffs von Anspruch 1.

Landwirtschaftliche Raupenfahrzeuge unterliegen während ihres Einsatzes auf einem zu bearbeitenden Feld oder bei einer Fahrt auf der öffentlichen Straße unterschiedlichen Restriktionen, beispielsweise fordert die Bearbeitung eines Feldes eine möglichst geringe Bodenverdichtung. Erreicht wird dies durch den Einsatz von Raupenlaufwerken und der damit einhergehenden Vergrößerung der Aufstandsfläche der Arbeitsmaschine. Der Einsatz von Raupenlaufwerken ermöglicht es somit entweder die Bodenverdichtung zu minimieren oder unter Ausnutzung der maximal möglichen Bodenverdichtung das Gesamtgewicht der Arbeitsmaschine und die damit einhergehenden realisierbaren Zugkräfte zu erhöhen. Zur Nutzung der Vorteile einer vergrößerten Aufstandsfläche, werden zunehmend Arbeitsmaschinen mit Raupenfahrwerken, welche wiederum über mindestens zwei Raupenlaufwerke verfügen, an sowohl einer Vorderachse als auch einer Hinterachse ausgestattet.

Der Einsatz von Raupenlaufwerken an landwirtschaftlichen Arbeitsmaschinen erfordert ein hohes Maß an Manövrierbarkeit. Dies betrifft insbesondere Raupengroßtraktoren, bei denen eine unzureichende Manövrierbarkeit zu Einbußen im Ernteertrag führen kann. Wesentlich dabei ist ein möglichst geringer Wenderadius.

Oftmals sind derartige Arbeitsmaschinen als Knicklenker ausgebildet und bestehen aus mindestens zwei Fahrzeugteilen, die mit einem Gelenk verbunden sind. Das Gelenk stellt dabei die vertikale Achse zur Verfügung, die ein horizontales Verschwenken der Fahrzeugteile mit ihren Raupenfahrwerken oder Radsätzen bei der Lenkung ermöglicht. Die Achse des Raupenfahrwerks oder Radsatzes des jeweiligen Fahrzeugteils ist starr gelagert, wodurch sich bei der Richtungsänderung ein bogenförmiger Verlauf einstellt.

Das landwirtschaftliche Raupenfahrzeug, von dem die Erfindung ausgeht, basiert auf einem Fahrgestell mit Raupenfahrwerken (DE 19 1912 103 930 U1), dessen Rahmen eine angelenkte Vorder- und Hinterachse aufweist. Sowohl die Vorder- als auch die Hinterachse sind dabei als Pendelachse ausgebildet, wobei die Vorderachse im Speziellen kardanisch aufgehängt ist und somit ein Verneigen und Verschwenken der Vorderachse zulässt. Dennoch ergibt sich hier ein Optimierungspotential im Hinblick auf die Manövrierbarkeit des landwirtschaftlichen Raupenfahrzeuges.

Der Erfindung liegt das Problem zugrunde, das bekannte landwirtschaftliche Raupenfahrzeug derart auszugestalten und weiterzubilden, dass dessen Manövrierbarkeit verbessert wird.

Das obige Problem wird bei einem landwirtschaftlichen Fahrzeug gemäß dem Oberbegriff von Anspruch 1 durch die Merkmale des kennzeichnenden Teils von Anspruch 1 gelöst.

Der vorschlagsgemäßen Lösung liegt zunächst die grundsätzliche Überlegung zugrunde, dass für die Lenkung der bezogen auf die Fahrzeuglängsachse gegenüberliegenden antreibbaren Raupenlaufwerke eine Aufhängung der Raupenlaufwerke an jeweils einem eigenen Achsschenkel eine einzelne Anlenkung dieser Raupenlaufwerke ermöglicht, wodurch die Manövrierbarkeit verbessert wird. Es ist weiter erkannt worden, dass sich eine solche Lenkung besonders gut umsetzen lässt, wenn sich die Achsschenkellenkung an der Vorderachse eines landwirtschaftlichen Raupenfahrzeuges befindet. Indem die Raupenlaufwerke einzeln auf den Achsschenkeln aufgehängt werden können, lassen sich das Lenkverhalten und der Fahrkomfort verbessern, während gleichzeitig der für die Lenkbewegung benötigte Bauraum verringert werden kann.

Im Einzelnen wird vorgeschlagen, dass die Vorderachse durch Achsschenkel, über die die zwei antreibbaren Raupenlaufwerke gelenkt sind, gebildet ist. Diese konstruktive Gestaltung ermöglicht eine Reduzierung des Fahrzeuggrundgewichtes, da auf einen Fahrzeugrahmen verzichtet werden kann. Zur Umsetzung der vorschlagsgemäßen Lösung können Raupenlaufwerke mit mehrfach, insbesondere zweifach oder dreifach, umgelenkten Raupenbändern eingesetzt werden, wodurch sich die Flexibilität des Raupenfahrzeugs erhöhen lässt.

Nach der besonders bevorzugten Ausgestaltung gemäß Anspruch 2 treibt ein hydrostatischer Antrieb die Raupenlaufwerke an. Dazu können die Raupenlaufwerke über einen gemeinsamen hydrostatischen Antrieb oder jeweils über einen eigenen hydrostatischen Antrieb verfügen. Einen wesentlichen Vorteil stellt die damit erreichte Lenkunterstützung dar.

Nach der weiter bevorzugten Ausgestaltung gemäß Anspruch 3 sind die hydrostatischen Antriebe der Raupenlaufwerke unabhängig voneinander angesteuert. Ein wesentlicher Vorteil hierbei ist, dass zur Unterstützung der Kurvenfahrt eine unterschiedliche Drehzahlsteuerung der Raupenlaufwerke möglich ist. Zur Steuerung der hydrostatischen Antriebe der Raupenlaufwerke sind gemäß Anspruch 4 jeweils eine zugeordnete eigene oder eine gemeinsame Steuerung vorgesehen.

Bei einer Ausgestaltung gemäß Anspruch 5 weist die Vorderachse zur Erhöhung des Fahrkomforts eine gefederte Aufhängung der Raupenlaufwerke auf.

Bevorzugt kann bei einer Ausgestaltung gemäß Anspruch 6 an den Raupenlaufwerken jeweils ein Frontgewicht befestigt sein oder befestigt werden. Besonders vorteilhaft ist es dabei, das Frontgewicht auf den Achsschenkeln der Raupenlaufwerke zu befestigen. Ein wesentlicher Vorteil ist dabei, dass eine individuelle und flexible Ballastierung erreicht werden kann.

Gemäß Anspruch 7 ist es vorteilhaft, wenn die Frontgewichte weder seitlich noch in Fahrtrichtung über die Abmessungen des Fahrzeuges hinausragen.

Nach der weiter bevorzugten Ausgestaltung gemäß Anspruch 8 ist eine Kühleranlage an der Front des landwirtschaftlichen Raupenfahrzeuges vorgesehen, welche im Wesentlichen liegend über der Vorderachse angeordnet ist. Hierbei wird unter liegend verstanden, dass die Kühleranlage mit ihrer Breitseite in einem flachen Winkel oder parallel zum Untergrund, auf dem sich das Raupenfahrzeug bewegt, angeordnet ist. Der Wesentliche Vorteil dieser Anordnung ist Raumschaffung, so dass der zur Lenkung und/oder Federung der Raupenlaufwerke benötigte Raum nicht eingeschränkt wird und vielmehr größere Federwege und Lenkeinschläge ermöglicht werden.

Bei einer Ausgestaltung gemäß Anspruch 9 ist der Verbrennungsmotor des Fahrzeugs mittig zwischen der Vorderachse und der Hinterachse angeordnet, wodurch die Gewichtsverteilung optimiert wird.

Entsprechend einer bevorzugten Ausgestaltung gemäß Anspruch 10 sind die Raupenlaufwerke der Hinterachse über Achsschenkel starr miteinander verbunden. Ein Wesentlicher Vorteil dabei ist, dass der Austausch der Hinterachse möglich wird, wodurch bereits existierende Fahrzeughinterachsen mit der vorschlagsgemäßen Lösung erweitert werden können.

Bei einer Ausgestaltung gemäß Anspruch 11 sind die Raupenlaufwerke der Vorder- und Hinterachse über Getriebe antreibbar. Dabei verfügen die Raupenlaufwerke der Vorderachse über jeweils ein Getriebe und die Raupenlaufwerke der Hinterachse über ein gemeinsames Getriebe. Insbesondere kann hier ein stufenloses Getriebe eingesetzt werden. Bevorzugt weist gemäß Anspruch 12 das Getriebe ein Summierungsgetriebe, beispielsweise ein Planetengetriebe, auf.

Nach der weiter bevorzugten Ausgestaltung gemäß Anspruch 13 weist das Getriebe mindestens eine Hydraulikpumpe auf. Diese kann mit einem Pumpenverteilergetriebe und/oder mit dem Summierungsgetriebe in Kraftfluss stehen. Bevorzugt ist die Hydraulikpumpe gemäß Anspruch 14 an den Achsschenkeln der Raupenlaufwerke der Vorderachse angeordnet.

Einer Ausgestaltung gemäß Anspruch 15 folgend, weisen die Achsschenkel bezogen auf die Fahrtrichtung auf Höhe eines hinteren Fahrwerksrades, insbesondere koaxial zur Achse des hinteren Fahrwerksrades, des Raupenlaufwerks ein Gelenk auf. Insbesondere kann das hintere Fahrwerksrad des Raupenlaufwerks als Antriebsrolle ausgebildet sein.

Im Folgenden wird die Erfindung anhand einer lediglich Ausführungsbeispiele darstellenden Zeichnung näher erläutert. In der Zeichnung zeigt
- Fig. 1: ein vorschlagsgemäßes landwirtschaftliches Raupenfahrzeug in Form eines Raupengroßtraktors in Seitenansicht,
- Fig. 2: das Fahrwerk des landwirtschaftlichen Raupenfahrzeuges gemäß Fig. 1 in einer Draufsicht, (a) ohne und (b) mit Lenkeinschlag der Vorderachse.

Das vorschlagsgemäße landwirtschaftliche Raupenfahrzeug 1, das hier beispielhaft als Raupengroßtraktor ausgebildet ist, kann ganz unterschiedlich ausgestaltet sein. Beispielsweise kann es sich bei dem landwirtschaftlichen Raupenfahrzeug 1 um einen Traktor, um eine selbstfahrende Erntemaschine, wie einen Mähdrescher oder einen Feldhäcksler handeln. Die Vorzüge der vorschlagsgemäßen Lösung zeigen sich besonders deutlich bei Raupenfahrzeugen mit mindestens einem Raupenfahrwerk. Bei dem dargestellten und insoweit bevorzugten Ausführungsbeispiel handelt es sich bei dem landwirtschaftlichen Raupenfahrzeug 1 um einen Raupengroßtraktor mit zwei Raupenfahrwerken, wie noch erläutert wird.

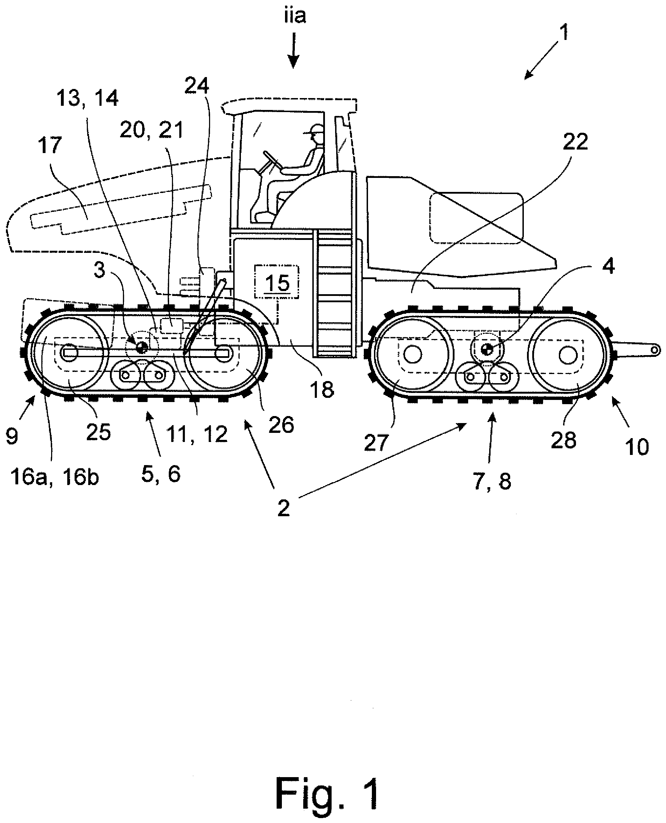

Das Fahrwerk 2 des hier beispielhaft beschriebenen landwirtschaftlichen Raupenfahrzeugs 1 weist eine Vorderachse 3 und eine Hinterachse 4 auf. An der Vorderachse 3 und an der Hinterachse 4 sind jeweils zwei, bezogen auf eine Fahrzeuglängsachse L, gegenüberliegende antreibbare Raupenlaufwerke 5-8 angeordnet. Die an der Vorderachse 3 angeordneten Raupenlaufwerke 5, 6 sind Teil eines vorderen Raupenfahrwerks 9 und die an der Hinterachse 4 angeordneten Raupenlaufwerke 7, 8 sind Teil eines hinteren Raupenfahrwerks 10. In der Ansicht in Fig. 1 sind nur die linken Raupenlaufwerke 5, 7 zu erkennen. Bezogen auf die Fahrzeuglängsachse L bzw. Fahrtrichtung liegen diesen Raupenlaufwerken 5, 7 entsprechende Raupenlaufwerke 6, 8 gegenüber.

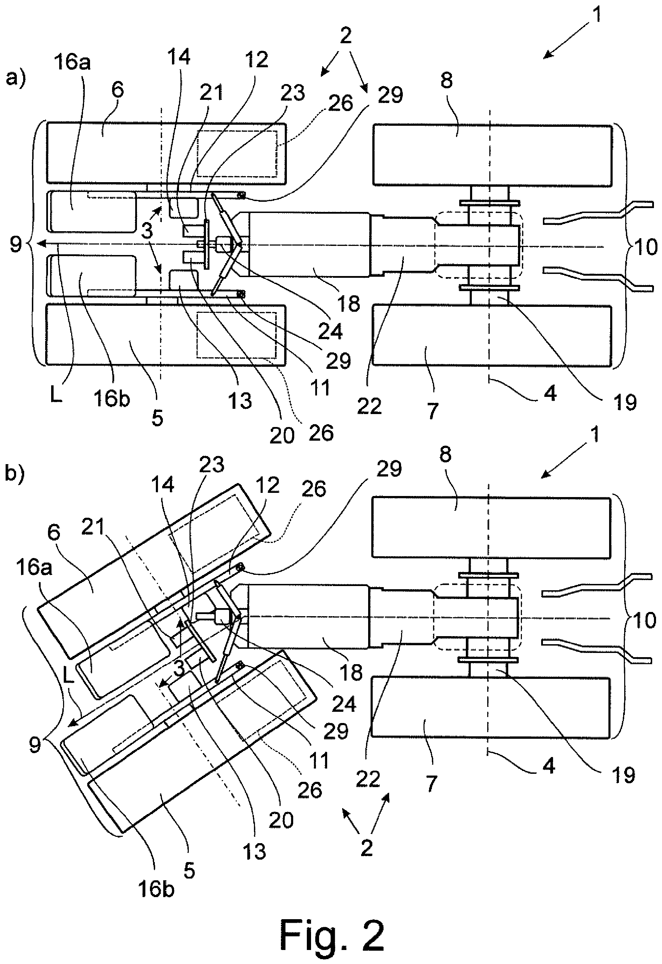

Bei dem in Fig. 2 dargestellten und insoweit bevorzugten Ausführungsbeispiel ist wesentlich, dass die Vorderachse 3 durch Achsschenkel 11, 12, über die die zwei antreibbaren Raupenlaufwerke 5, 6 gelenkt sind, gebildet ist. Diese Anordnung stellt eine Frontlenkung mit einer Aufhängung und Anlenkung der zwei gegenüberliegenden antreibbaren Raupenlaufwerke 5, 6 mittels einer Achsschenkellenkung dar und ermöglicht eine Einzelaufhängung der vorderen Raupenlaufwerke 5, 6, wodurch sich das Lenkverhalten und der Fahrkomfort des Raupenfahrzeuges 1 erheblich verbessert. Dieser Aufbau des Fahrwerks 2 eines Raupenfahrzeuges 1 macht den Verzicht auf einen Fahrzeugrahmen möglich, so dass das Fahrzeuggrundgewicht reduziert werden kann. Diese Gewichtsreduktion des Fahrzeuggrundgewichtes ermöglicht entweder eine Verringerung der Bodenverdichtung durch das Raupenfahrzeug 1 oder bei gleichbleibender Bodenverdichtung die Vergrößerung der Gesamtgröße des Fahrzeugs 1 oder des Ernteertrags. Des Weiteren verbessert der Verzicht auf einen Fahrzeugrahmen die Zugänglichkeit für Reparatur und Montage. Die vorschlagsgemäße Aufhängung der Raupenlaufwerke 5, 6 über die Achsschenkel 11, 12 erlaubt es im eingelenkten Zustand, wie durch die Strichpunktlinie in Fig. 2b) dargestellt, die Raupenlaufwerke 5, 6 oder die dem jeweiligen Raupenlaufwerk zugeordneten Laufwerksmittelachsen (strichpunktiert dargestellt) versetzt zueinander auszurichten. Versetzt bedeutet hierbei, dass im Gegensatz zur Koaxialität der Laufwerksmittelachsen im nicht eingelenkten Zustand, die Laufwerksmittelachsen im eingelenkten Zustand so verschoben werden können, dass sie entweder parallel zueinander sind oder zwischen sich einen Winkel einschließen. Demnach können im eingelenkten Zustand auch die Raupenlaufwerke 5, 6 parallel oder mit einem Winkel zueinander ausgerichtet sein, wodurch sich ein reduzierter Wenderadius einstellt. Besonders vorteilhaft ist es dabei, wenn die Raupenfahrwerke 5, 6 der Vorderachse 3 eine gefederte Aufhängung aufweisen.

Besonders bevorzugt verfügen die Raupenlaufwerke 5, 6 der Vorderachse 3 zum Antrieb und zur Unterstützung der Lenkung jeweils über einen eigenen hydrostatischen Antrieb 13, 14 oder über einen gemeinsamen hydrostatischen Antrieb. Ist jedes der Raupenlaufwerke 5, 6 der Vorderachse 3 mit einem hydrostatischen Antrieb 13, 14 ausgestattet, dann ist es besonders vorteilhaft, wenn der eine hydrostatische Antrieb 13 und der andere hydrostatische Antrieb 14 unabhängig voneinander ansteuerbar sind. Dazu kann zur Ansteuerung der hydrostatischen Antriebe 13, 14 der Raupenlaufwerke 5, 6 jeweils eine zugeordnete eigene oder eine gemeinsame Steuerung 15 vorgesehen sein. Indem eine individuelle Ansteuerung und Überwachung der einzelnen hydrostatischen Antriebe möglich ist, kann durch die unterschiedliche Drehzahlsteuerung der Raupenlaufwerke 5, 6 die Kurvenfahrt unterstützt werden, beispielsweise kann bei dem bei der Kurvenfahrt außenliegenden Raupenlaufwerk 5, 6 die Drehzahl und/oder das Drehmoment erhöht werden. Die Drehzahlsteuerung führt in Kombination mit der oben genannten Einzelaufhängung zu einer Verbesserung des Wendekreises und der Manövrierbarkeit des Raupenfahrzeuges 1.

Auch die Ballastierung des Raupenfahrzeuges 1 beeinflusst das Fahrverhalten maßgeblich. Die Zusammenschau der Fig. 1 und Fig. 2 zeigt eine besonders bevorzugte Ausführungsform dieser Ballastierung, wobei jeweils ein Frontgewicht 16a, 16b an den Raupenlaufwerken 5, 6, insbesondere auf den Achsschenkeln 11, 12 der Raupenlaufwerke 5, 6, der Vorderachse 3 befestigbar oder befestigt ist. Besonders bevorzugt ist es dabei, wenn die Frontgewichte 16a, 16b seitlich oder in Fahrtrichtung L nicht über die äußere Begrenzung des Fahrzeuges 1 hinausragen. Diese Positionierung ändert den Schwerpunkt des Fahrzeugs 1 und reduziert zusätzlich die auf das Fahrzeug 1 wirkenden Kräfte. Mit der Befestigung des Frontgewichts 16a, 16b an einem Raupenlaufwerk 5, 6 oder einem Achsschenkel 11, 12 lässt sich die Ballastierung individuell und flexibel gestalten und kann schnell an die Gegebenheiten angepasst werden. Zusätzlich kann auch am Heck des Raupenfahrzeugs 1 ein Gewicht zur Ballastierung vorgesehen sein.

Des Weiteren kann es vorteilhaft sein, die Federwege und/oder Lenkeinschläge der Raupenfahrwerke 5, 6 zu vergrößern, indem wie in Fig. 1 gezeigt, frontseitig eine Kühleranlage 17 vorgesehen ist, die im Wesentlichen liegend über der Vorderachse 3 angeordnet ist. Diese Anordnung bewirkt einen kleineren Wenderadius und die Erhöhung des Fahrkomforts, sowie eine kompaktere Gestaltung der Gesamtmaschine. Ein weiterer positiver Effekt der liegenden Anordnung der Kühleranlage 17 ist die verbesserte Ansaugung und Abgabe der Luft, so wird frische Luft von oben angesaugt und die warme Luft seitlich abgegeben, ohne die Fahrerkabine durch die Abluft zu beeinträchtigen.

Das Fahrwerk 2 weist weiter einen Fahrantrieb 18 für die Erzeugung eines Vortriebs des Raupenfahrzeuges 1 auf. Bei dem dargestellten Ausführungsbeispiel ist der Fahrantrieb 18 als Verbrennungsmotor ausgebildet und mittig zwischen der Vorderachse 3 und der Hinterachse 4 angeordnet, um zum einen das Gewicht optimal verteilen zu können und zum anderen günstige Bauräume zur Verrohrung und Installation der Luftansaugung und des Abgassystems zu schaffen.

Im Gegensatz zur Einzelaufhängung der Raupenlaufwerke 5, 6 an der Vorderachse 3 ist die Hinterachse 4 hier und vorzugsweise durch Achsschenkel 19, über die zwei gemeinsam antreibbare Raupenlaufwerke 7, 8 starr miteinander verbunden sind, gebildet. Dies ermöglicht einen Austausch der Hinterachse 4, so dass beispielsweise bereits bestehende Systeme mit einer vorschlagsgemäßen Vorderachse 3 ausgestattet werden können.

Zum Antrieb der Raupenlaufwerke 5-8 der Vorderachse 3 und Hinterachse 4 sind zwischen dem Antrieb 18 und den jeweiligen Raupenlaufwerken 5-8 Getriebe 20, 21, 22 vorgesehen. Dabei sind die Raupenlaufwerke 5, 6 der Vorderachse 3 über jeweils ein eigenes Getriebe 20, 21 und/oder die Raupenlaufwerke 7, 8 der Hinterachse 4 über ein gemeinsames Getriebe 22 antreibbar. Als besonders vorteilhaft hat sich dabei der Einsatz eines stufenlosen Getriebes herausgestellt. Da die Raupenlaufwerke 5, 6 der Vorderachse 3 jeweils über ein eigenes Getriebe 20, 21 verfügen, lässt sich die Übertragung unterschiedlicher Drehzahlen auf die Raupenlaufwerke 5, 6 zur Kurvenfahrt sichern. In einer weiter bevorzugten Ausführungsform weist das Getriebe 20, 21, 22 ein Summierungsgetriebe 23 auf, um die Kraft vom Fahrantrieb 18 und vom hydrostatischen Antrieb 13, 14 auf die Raupenlaufwerke 5, 6 zu übertragen.

Bevorzugt weist das zum Antrieb genutzte Getriebe 20, 21, 22 mindestens eine Hydraulikpumpe 24 auf und die mindestens eine Hydraulikpumpe 24 steht jeweils mit einem Pumpenverteilergetriebe und/oder mit dem Summierungsgetriebe 23 in Kraftfluss. Vorteilhafterweise ist die mindestens eine Hydraulikpumpe 24 auf einem der Achsschenkel 11, 12 der Raupenlaufwerke 5, 6 der Vorderachse 3 angeordnet.

In den Raupenlaufwerken 5-8 laufen Fahrwerksräder 25-28, dabei sind die Fahrwerksräder 25, 26 Bestandteil des vorderen Raupenfahrwerks 9 und die Fahrwerksräder 27, 28 Bestandteil des hinteren Raupenfahrwerks 10. Entsprechend laufen die Fahrwerksräder 25, 26 in einem zugeordneten der Raupenlaufwerke 5, 6 und die Fahrwerksräder 27, 28 in einem anderen zugeordneten der Raupenlaufwerke 7, 8. Unter dem Begriff "Fahrwerksrad" werden vorliegend Räder, die einem der Raupenfahrwerk 9, 10 zugeordnet sind und in entsprechenden Raupenlaufwerken 5-8 laufen, verstanden.

Besonders vorteilhaft ist es, wenn die Achsschenkel 11, 12 der Raupenlaufwerke 5, 6 jeweils ein Gelenk 31 aufweisen und das Gelenk 31 bezogen auf die Fahrtrichtung L auf Höhe des hinteren Fahrwerksrades 26, das insbesondere als Antriebsrad ausgebildet ist, des dazugehörigen Raupenlaufwerks 5,6 angeordnet ist. In diesem Ausführungsbeispiel sind die hinteren Fahrwerksräder 26 der jeweiligen Raupenlaufwerke 5, 6 antreibbar. Es ist jedoch auch möglich, dass andere oder alle Fahrwerksräder 25-28 der Raupenfahrwerke 5-8 antreibbar sind.

### Bezugszeichenliste

- 1: Raupenfahrzeug
- 2: Fahrwerk
- 3: Vorderachse
- 4: Hinterachse
- 5-8: Raupenlaufwerk
- 9: Vorderes Raupenfahrwerk
- 10: Hinteres Raupenfahrwerk
- 11, 12: Achsschenkel
- 13, 14: Hydrostatischer Antrieb
- 15: Steuerung
- 16a, 16b: Frontgewichte
- 17: Kühleranlage
- 18: Fahrantrieb
- 19: Achsschenkel
- 20, 21, 22: Getriebe
- 23: Summierungsgetriebe
- 24: Hydraulikpumpe
- 25-28: Fahrwerksräder
- 29: Gelenk der Achsschenkel 11, 12

## Patentansprüche

1. Landwirtschaftliches Raupenfahrzeug, insbesondere Raupengroßtraktor, mit einem Fahrwerk (2), welches eine Vorderachse (3) und eine Hinterachse (4) aufweist, wobei an der Vorderachse (3) und an der Hinterachse (4) jeweils zwei, bezogen auf eine Fahrzeuglängsachse (L), gegenüberliegende antreibbare Raupenlaufwerke (5-8) angeordnet sind,
**dadurch gekennzeichnet,**
**dass** die Vorderachse (3) durch Achsschenkel (11, 12), über die die zwei antreibbaren Raupenlaufwerke (5, 6) gelenkt sind, gebildet ist.

2. Landwirtschaftliches Raupenfahrzeug nach Anspruch 1, **dadurch gekennzeichnet, dass** die Raupenlaufwerke (5, 6) der Vorderachse (3) jeweils über einen hydrostatischen Antrieb (13, 14) oder über einen gemeinsamen hydrostatischen Antrieb verfügen.

3. Landwirtschaftliches Raupenfahrzeug nach Anspruch 2, **dadurch gekennzeichnet, dass** der eine hydrostatische Antrieb (13) und der andere hydrostatische Antrieb (14) unabhängig voneinander ansteuerbar sind.

4. Landwirtschaftliches Raupenfahrzeug nach Anspruch 2 oder 3, **dadurch gekennzeichnet, dass** zur Ansteuerung der hydrostatischen Antriebe (13, 14) der Raupenlaufwerke (5, 6) jeweils eine zugeordnete eigene oder eine gemeinsame Steuerung (15) vorgesehen ist.

5. Landwirtschaftliches Raupenfahrzeug nach einem der vorhergehenden Ansprüche, **dadurch gekennzeichnet, dass** die Raupenlaufwerke (5, 6) der Vorderachse (3) eine gefederte Aufhängung aufweisen.

6. Landwirtschaftliches Raupenfahrzeug nach einem der vorhergehenden Ansprüche, **dadurch gekennzeichnet, dass** jeweils ein Frontgewicht (16a, 16b) an den Raupenlaufwerken (5, 6), insbesondere auf den Achsschenkeln (11, 12) der Raupenlaufwerke (5, 6), der Vorderachse (3) befestigbar oder befestigt ist.

7. Landwirtschaftliches Raupenfahrzeug nach Anspruch 6, **dadurch gekennzeichnet, dass** die Frontgewichte (16a, 16b) seitlich oder in Fahrtrichtung nicht über die äußere Begrenzung des Fahrzeuges (1) hinausragen.

8. Landwirtschaftliches Raupenfahrzeug nach einem der vorhergehenden Ansprüche, **dadurch gekennzeichnet, dass** frontseitig eine Kühleranlage (17) vorgesehen ist, die im Wesentlichen liegend über der Vorderachse (3) angeordnet ist.

9. Landwirtschaftliches Raupenfahrzeug nach einem der vorhergehenden Ansprüche, **dadurch gekennzeichnet, dass** ein Verbrennungsmotor (18) zum Antrieb des Fahrzeuges (1) mittig zwischen der Vorderachse (3) und der Hinterachse (4) angeordnet ist.

10. Landwirtschaftliches Raupenfahrzeug nach einem der vorhergehenden Ansprüche, **dadurch gekennzeichnet, dass** die Hinterachse (4) durch Achsschenkel (19), über die die zwei gemeinsam antreibbaren Raupenlaufwerke (7, 8) starr miteinander verbunden sind, gebildet ist.

11. Landwirtschaftliches Raupenfahrzeug nach einem der vorhergehenden Ansprüche, **dadurch gekennzeichnet, dass** die Raupenlaufwerke (5, 6) der Vorderachse (3) über jeweils ein Getriebe (20, 21), insbesondere ein stufenloses Getriebe, und/oder die Raupenlaufwerke (7, 8) der Hinterachse (4) über ein Getriebe (22), insbesondere ein stufenloses Getriebe, antreibbar sind.

12. Landwirtschaftliches Raupenfahrzeug nach Anspruch 11, **dadurch gekennzeichnet, dass** das Getriebe (20, 21, 22) ein Summierungsgetriebe (23) aufweist.

13. Landwirtschaftliches Raupenfahrzeug nach Anspruch 11 oder 12, **dadurch gekennzeichnet, dass** das Getriebe (20, 21, 22) mindestens eine Hydraulikpumpe (24) aufweist und dass die mindestens eine Hydraulikpumpe (24) jeweils mit einem Pumpenverteilergetriebe und/oder mit dem Summierungsgetriebe (23) in Kraftfluss steht.

14. Landwirtschaftliches Raupenfahrzeug nach Anspruch 13, **dadurch gekennzeichnet, dass** die mindestens eine Hydraulikpumpe (24) auf einem der Achsschenkel (11, 12) der Raupenlaufwerke (5, 6) der Vorderachse (3) angeordnet ist.

15. Landwirtschaftliches Raupenfahrzeug nach einem der vorhergehenden Ansprüche, **dadurch gekennzeichnet, dass** die Achsschenkel (11, 12) jeweils ein Gelenk (29) aufweisen und das Gelenk (29) bezogen auf die Fahrtrichtung auf Höhe eines hinteren Fahrwerksrades (26), das insbesondere als Antriebsrad ausgebildet ist, des dazugehörigen Raupenlaufwerks (5, 6) angeordnet ist.
